Europäisches Patentamt

European Patent Office

Office européen des brevets

(19)

(11) Veröffentlichungsnummer: **0 095 528**
**A1**

(12) **EUROPÄISCHE PATENTANMELDUNG**

(21) Anmeldenummer: **82111876.7**

(22) Anmeldetag: **21.12.82**

(51) Int. Cl.³: **B 29 C 17/02**

(30) Priorität: **29.05.82 DE 8215787 U**

(43) Veröffentlichungstag der Anmeldung: **07.12.83**
**Patentblatt 83/49**

(84) Benannte Vertragsstaaten: **AT BE CH DE FR GB IT LI NL**

(71) Anmelder: **D. Koch Vertriebsbüro Gesellschaft mit beschränkter Haftung, Borsigstrasse 11a, D-5657 Haan 1 (DE)**

(72) Erfinder: **Koch, Dieter, Mahnert 5, D-4006 Erkrath 2 (DE)**

(74) Vertreter: **Habbel, Hans-Georg, Dipl.-Ing., Postfach 3429 Am Kanonengraben 11, D-4400 Münster (DE)**

(54) **Arbeitstisch zur Herstellung von gebogenen Fensterprofilen.**

(57) Es wird ein Arbeitstisch zur Herstellung von gebogenen Fensterprofilen unter Verwendung von zwei querschnittsstabilen Formschablonenteilen (14a, b) vorgeschlagen, wobei in der Montageplatte (4) des Arbeitstisches Befestigungsschlitze (12) vorgesehen sind, die sich strahlenförmig über die Ebene der Montageplatte erstrecken und in Befestigungsschlitzen Abstandshalter angeordnet sind, die entsprechend der Krümmung beliebig festlegbar sind.

EP 0 095 528 A1

"Arbeitstisch zur Herstellung von gebogenen Fensterprofilen"

Die Erfindung bezieht sich auf einen Arbeitstisch zur
Herstellung von gebogenen Fensterprofilen unter Verwendung von zwei querschnittsstabilen, aber im Sinne
einer Längskrümmungsänderung biegsamen und konzentrisch
zueinander angeordneten Formschablonenteilen, die von
einer Montageplatte getragen werden.

In der DE-OS 3o 2o 922 wird eine Formschablone beschrieben, die aus zwei Schablonenteilen besteht, die
biegbar sind und aus gleitfähigem Material hergestellt
werden. Durch diese Formschablonenteile werden die
erhitzten Kunststoffprofile hindurchgezogen und dadurch in die gewünschte Form verformt. Die Formschablonenteile sind auf einem Arbeitstisch angeordnet, der
aus einer Montageplatte und einer Führungsplatte besteht. Auf dem Arbeitstisch können die Formschablonenteile hinsichtlich ihrer Form geändert werden.

Der Erfindung liegt die Aufgabe zugrunde, einen Arbeitstisch zu schaffen, der besser an seine Aufgabe
angepaßt ist und bei dem Variationen der Formgebungen
leichter durchgeführt werden können.

Diese der Erfindung zugrundeliegende Aufgabe wird durch die in den Ansprüchen genannten Merkmale gelöst, insbesondere aber dadurch, daß ein sogenannter Biegetisch vorgeschlagen wird, auf dessen Montageplatte Befestigungsschlitze vorgesehen sind, die ausgehend von einem Zentrum sich strahlenförmig über die Ebene der Montageplatte erstrecken, wobei in den Befestigungsschlitzen feststellbar und verstellbar angeordnete Abstandshalter vorgesehen werden, die die Formschablonenteile zwischen sich festlegend einstellbar sind.

Mit dem Biegetisch wird gemäß einem weiteren wesentlichen Merkmal der Erfindung ein sogenannter Anlauftisch verbunden, so daß die aus dem Heizgerät herausgezogenen Fensterprofilelemente möglichst nahtlos auf den Tisch geführt werden können, wobei sowohl der Biegetisch wie auch der Anlauftisch mit Flüssigkeitsrinnen ausgerüstet sind, die die während des Formvorganges austretende Heizflüssigkeit aus dem Heizgerät aufnimmt und sammelt und somit einer neuen Verwendung zuführt.

Vorteilhafte Ausführungsformen des Vorschlages gemäß der Erfindung sind in den Unteransprüchen definiert.

Ein Ausführungsbeispiel der Erfindung wird nachfolgend anhand der Zeichnungen erläutert. Die Zeichnungen zeigen dabei in

Fig. 1          in einer Seitenansicht die Gesamtanordnung, in

Fig. 2          eine Draufsicht auf einen Teil des Biegetisches und den Anlauftisch, in

Fig. 3          eine Draufsicht in größerem Maßstab auf einen Teil der Montageplatte, in

Fig. 4     einen Schnitt gemäß der Linie 4 - 4 in

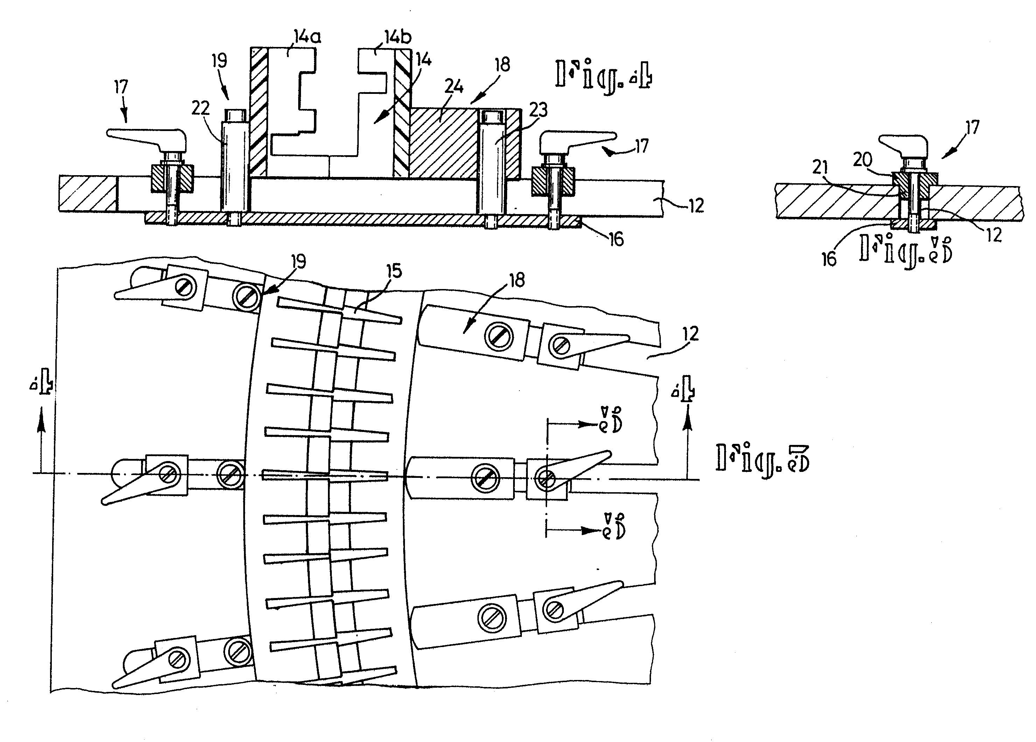

Fig. 3  und in

Fig. 5     einen Schnitt gemäß der Linie 5 - 5 in
Fig. 3.

In den Zeichnungen ist mit 1 ein Biegetisch bezeichnet, mit 2 ein Anlauftisch und mit 3 ein Heizgerät, wobei das Heizgerät an sich bekannter Bauart ist, d.h. im wesentlichen aus einer Wanne besteht, die erhitzte Flüssigkeit aufnimmt und in der das Fensterprofil erwärmt wird und derart verformbar wird.

Auf dem Biegetisch ist eine Montageplatte 4 angeordnet, die zu ihrer Bedienungsseite hin in einer Flüssigkeitssammelrinne 5 mündet, von der eine Verbindungsleitung 6 zu einem Flüssigkeitssammelbehälter 7 führt. Die Montageplatte 4 ist gegenüber der Horizontalen geneigt, beispielsweise etwa um 2o$^o$, und zwar ansteigend von der Betätigungsseite der Montageplatte zum Ende hin. Die Betätigungsseite ist dabei mit B bezeichnet.

Die Montageplatte 4 ist auf einen Tisch gestellt angeordnet. An die Montageplatte schließt der Anlauftisch 2 an, wobei an der mit dem Biegetisch in Verbindung kommenden Seite dieser Anlauftisch eine Winkelschiene 8 aufweist, mit der er in die Flüssigkeitsauffangrinne 5 eingehängt werden kann. Auch der Anlauftisch 2 weist eine Flüssigkeitsauffangrinne 9 auf, die über eine Leitung 1o zum Flüssigkeitssammelbehälter 7 führt. Die Oberseite der Montageplatte 4 und der Arbeitsplatte 11 des Anlauftisches fluchten miteinander, d.h. auch die Arbeitsplatte 11 ist gegenüber der Horizontalen geneigt.

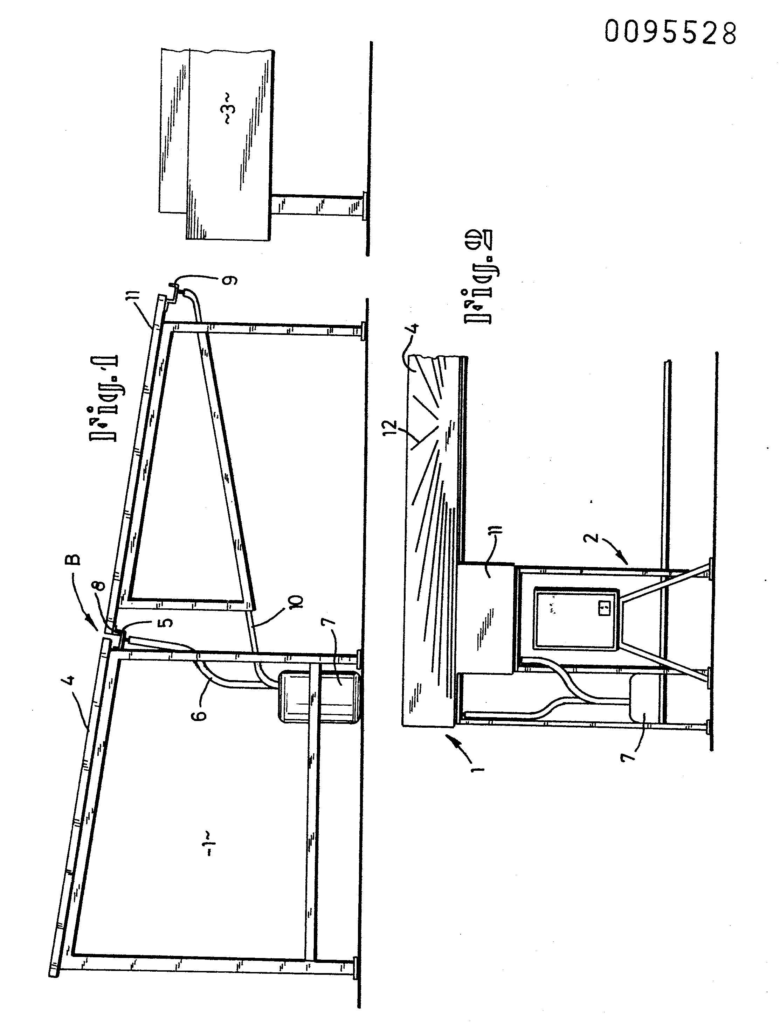

Auf der Oberseite der Montageplatte 4 sind ausgehend von einem Zentrum sich strahlenförmig über die Ebene der Montageplatte erstreckend Befestigungsschlitze 12 vorgesehen, wobei bei der Darstellung in Fig. 1 und 2 die Formschablonen und Befestigungsmittel aus Übersichtlichkeitsgründen nicht dargestellt sind.

In Fig. 4 ist mit 14 eine aus zwei Formschablonenteilen 14a und 14b bestehende Formschablone bezeichnet, wobei die Formschablonenteile querschnittsstabil, aber im Sinne einer Längskrümmungsänderung dadurch biegsam sind, daß beispielsweise entsprechende Schlitze 15 in die Formschablonenteile eingeschnitten sind.

Die Formschablone 14 wird über Befestigungsmittel festgelegt, die im wesentlichen aus einer Widerlagerplatte 16, in dieser angeordneten Schraubvorrichtungen 17 und von dieser getragenen Widerlagerblöcken 18 und 19 bestehen. Die Schraubvorrichtungen ermöglichen ein Befestigen der Widerlagerplatte 16 dadurch (wie dies in Fig. 5 besonders dargestellt ist), daß mit der Schraubvorrichtung 17 ein T-Stück 2o verbunden ist, das mit seinem Steg 21 in den Schlitz 12 ragt und dadurch eine Führung und sichere Festlegung der Widerlagerplatte einerseits und gleichzeitig damit der Widerlagerblöcke 18 und 19 ermöglicht.

Bei dem in Fig. 3 und 4 dargestellten Ausführungsbeispiel besteht der Widerlagerblock 19 aus einem Bolzen 22. Der Widerlagerblock 18 besteht einerseits ebenfalls aus einem Bolzen 23 und einem damit verbundenen Distanzstück 24. Beide kommen zur Anlage an der Außenseite der Formschablone 14 und können in ihrer Lage über die Schraubvorrichtungen 17 arretiert und eingestellt werden.

Aufgrund der strahlenförmigen Ausbildung der Schlitze 12 ist nunmehr jede beliebige Form für das zu formende Fensterprofil einstellbar, ohne daß hierzu große Umänderungen notwendig sind. Hierbei kann so vorgegangen werden, daß die Oberseite der Montageplatte 4 mit entsprechenden Skizzen, Maßen, Maßeinteilungen od. dgl. versehen ist, so daß ein schnelles wiederholtes Einstellen bestimmter Profile ohne Schwierigkeiten gegeben ist.

Die erfindungsgemäße Einrichtung schafft eine Hilfsanordnung zur Verformung von Fensterprofilen, die dem die Arbeit Durchführenden eine erhebliche Erleichterung bringt, ein Auffangen der Flüssigkeit aus dem Heizgerät gewährleistet und gleichzeitig leicht wiederholbare Einstellungen der Schablonen gewährleistet.

Anstelle der Distanzstücke 24 können hier auch Druckmittel, beispielsweise ein Druckschlauch, eingesetzt werden, der einerseits den Anlagedruck schafft, andererseits auch die Möglichkeit gibt, die Formschablonenhälfte 14b nunmehr auf die gegenüberliegende Formschablonenhälfte 14a zu drücken.

Um ein Verziehen der Formschablone 14 zwischen den Widerlagerblöcken 18 und 19 zu vermeiden, kann vorgesehen sein, daß die mit den Formschablonenteilen 14a und 14b in Kontakt kommenden Seiten der Widerlagerblöcke jeweils mit einer einen hohen Reibwiderstand aufweisenden Außenseite versehen sind.

Patentansprüche:

1. Arbeitstisch zur Herstellung von gebogenen Fensterprofilen unter Verwendung von zwei querschnittsstabilen, aber im Sinne einer Längskrümmungsänderung biegsamen und konzentrisch zueinander angeordneten Formschablonenteilen, die von einer Montageplatte getragen werden, gekennzeichnet durch in der Montageplatte (4) angeordnete Befestigungsschlitze (12), die ausgehend von einem Zentrum sich strahlenförmig über die Ebene der Montageplatte (4) erstrecken und in den Befestigungsschlitzen (12) feststellbar und verstellbar angeordnete Abstandshalter, die die Formschablonenteile (14a, 14b) zwischen sich festlegend einstellbar sind.

2. Vorrichtung nach Anspruch 1, dadurch gekennzeichnet, daß die Montageplatte (4) tischartig ausgebildet ist (Biegetisch (1)).

3. Vorrichtung nach Anspruch 1 und 2, dadurch gekennzeichnet, daß die Montageplatte (4) von der Betätigungsseite (B) aus ansteigend gesehen eine Neigung von etwa 2o° aufweist.

4. Vorrichtung nach einem oder mehreren der vorhergehenden Ansprüche, dadurch gekennzeichnet, daß die Montageplatte (4) an ihrer Betätigungsseite (B) eine Flüssigkeitsauffangrinne (5) aufweist.

5. Vorrichtung wenigstens nach Anspruch 1, dadurch gekennzeichnet, daß die Abstandshalter auf der Montageplattenoberseite aus mit den Außenseiten der Formschablonenteile in Kontakt kommenden Widerlagerblöcken (18, 19) bestehen, die in einer an der Unterseite der Montageplatte angeordneten Widerlagerplatte (16) angeordnet sind, wobei die die Widerlagerblöcke tragende Widerlagerplatte mittels Schraubvorrichtungen (17) an der Montageplatte (4) festlegbar ist.

6. Vorrichtung wenigstens nach Anspruch 1 und 5, dadurch gekennzeichnet, daß die Schraubvorrichtungen (17) ein T-Stück (2o) aufweisen, das sich auf der Oberseite der Montageplatte (4) abstützt und mit einem von der Schraubvorrichtung durchquerten Steg (21) in den Befestigungsschlitz (12) reicht.

7. Vorrichtung nach Anspruch 6, gekennzeichnet durch Schraubknebel zur Festlegung des T-Stückes und der Widerlagerplatte (16) an der Montageplatte (4).

8. Vorrichtung wenigstens nach Anspruch 1 und 5, dadurch gekennzeichnet, daß der Widerlagerblock auf der einen Seite der Formschablonenteile (14a, 14b) als Anlageblock ausgebildet ist.

9. Vorrichtung wenigstens nach Anspruch 1 und 5, dadurch gekennzeichnet, daß der Widerlagerblock auf der gegenüberliegenden Seite der

Formschablonenteile aus einem auf einem Zapfen angeordneten Distanzstück (24) gebildet ist.

10. Vorrichtung wenigstens nach Anspruch 1, dadurch gekennzeichnet, daß dem die Montageplatte (4) tragenden sogenannten Biegetisch (1) ein sogenannter Anlauftisch (2) vorgeschaltet ist, der mit dem Biegetisch verbunden ebenfalls eine Flüssigkeitsauffangrinne (9) aufweist.

11. Vorrichtung wenigstens nach Anspruch 1 und 1o, dadurch gekennzeichnet, daß die Flüssigkeitsauffangrinnen (5, 9) über Verbindungsleitungen (6, 1o) mit einem Flüssigkeitssammelbehälter (7) verbunden sind.

12. Vorrichtung nach Anspruch 1o, dadurch gekennzeichnet, daß der Anlauftisch (2) an seiner der Betätigungsseite abgewandten, mit der Montageplatte (4) in Kontakt kommenden Seite eine Winkelschiene (8) aufweist, mit der die Arbeitsplatte des Anlauftisches in die Flüssigkeitsauffangrinne (5) der Montageplatte (4) einhängbar ist.

13. Vorrichtung wenigstens nach Anspruch 11 und 12, dadurch gekennzeichnet, daß im Arbeitszustand die obere Fläche der Montageplatte mit der oberen Fläche des Anlauftisches fluchtet und zwischen der Montageplatte und der zugewandten Seite der Arbeitsplatte des Anlauftisches ein dem Flüssigkeitsdurchtritt

dienender Spalt verbleibt.

14. Vorrichtung wenigstens nach Anspruch 1o, dadurch gekennzeichnet, daß die Arbeitsplatte (11) des Anlauftisches (2) die gleiche Neigung wie die Montageplatte aufweist.

0095528

Fig. 1

Fig. 2

Fig. 4a

Fig. 4b

Fig. 5

a

Europäisches Patentamt

**EUROPÄISCHER RECHERCHENBERICHT**

0095528

Nummer der Anmeldung

EP 82 11 1876

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | DE-C- 292 957 (BAUER)<br>* Figuren * | 1 | B 29 C 17/02 |
| Y | EP-A-0 041 154 (WITTEKE) | 1,2,8 | |
| A | DE-A-2 606 436 (ARNDT-NIESE)<br>* Figuren; Referenz 36 * | 1 | |
| A | FR-A-2 345 278 (DYNAMIT NOBEL)<br>* Figuren; Anspruch 7 * | 2-4 | |
| A | DE-A-1 947 414 (FELDER)<br><br>* Figuren * | 10,12-14 | |
| A | DE-A-1 289 570 (MEACKER)<br>* Figuren * | 6,7 | RECHERCHIERTE SACHGEBIETE (Int. Cl. 3) |
| A | US-A-3 954 717 (TARR)<br>* Figuren * | 6,7 | B 29 C<br>B 25 B<br>B 23 Q<br>B 21 D<br>B 29 H |
| A | DE-A-2 705 055 (KOCHS)<br>* Figuren 5-7 * | 5,9 | |
| A | GB-A- 759 779 (ROLLS ROYCE)<br>* Figuren 1,2; Referenz 19 * | 8 | |
| | --- -/- | | |

Der vorliegende Recherchenbericht wurde für alle Patentansprüche erstellt.

| Recherchenort | Abschlußdatum der Recherche | Prüfer |
|---|---|---|
| DEN HAAG | 31-08-1983 | CORDENIER J. |

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | DE-A-2 409 325 (TIEFBOHR)  <br><br> * Figur 15, Referenz 24 *  <br><br> --- | 4,10, 11 | |
| A | US-A-1 351 472 (FARMER)  <br><br> * Figuren *  <br><br> --- | | |
| A | US-A-3 776 539 (CURTIS)  <br><br> * Figuren *  <br><br> ----- | | |
| | | | RECHERCHIERTE SACHGEBIETE (Int. Cl. ³) |

Der vorliegende Recherchenbericht wurde für alle Patentansprüche erstellt.

| Recherchenort <br> DEN HAAG | Abschlußdatum der Recherche <br> 31-08-1983 | Prüfer <br> CORDENIER J. |
|---|---|---|